# EUROPÄISCHE PATENTSCHRIFT

(11) **EP 2 903 797 B1**
(45) Veröffentlichungstag und Bekanntmachung des Hinweises auf die Patenterteilung: **20.07.2016**
(21) Anmeldenummer: 13791716.7
(22) Anmeldetag: 09.08.2013
(51) Int. Cl.: B29C 41/28, B29C 41/34, B29C 33/72

(54) **BANDGIEßANLAGE UND VERFAHREN ZUM BETRIEB DERSELBEN**
STRIP CASTING INSTALLATION AND METHOD FOR OPERATING THE SAME
INSTALLATION DE COULÉE EN BANDE ET PROCÉDÉ PERMETTANT DE FAIRE FONCTIONNER LADITE INSTALLATION

(30) Priorität: 27.08.2012 AT 9312012
(43) Veröffentlichungstag der Anmeldung: 12.08.2015
(73) Patentinhaber: Berndorf Band GmbH, 2560 Berndorf (AT)
(72) Erfinder: MORGENBESSER, Karl, A-2870 Aspang (AT)
(74) Vertreter: Burger, Hannes
(86) Internationale Anmeldenummer: PCT/AT2013/050159
(87) Internationale Veröffentlichungsnummer: WO 2014/032069

(56) Entgegenhaltungen:
- WO-A1-2004/089594
- US-A- 4 421 154
- US-A1- 2009 302 506

## Beschreibung

Die Erfindung betrifft eine Bandgießanlage, umfassend ein Endlosband aus Metall, einen Antrieb zum Bewegen des Endlosbands in zumindest einer Hauptbewegungsrichtung, eine Einrichtung zum Auftragen eines flüssigen oder pastösen Werkstoffes auf das genannte Endlosband und eine der Auftragseinrichtung in der Hauptbewegungsrichtung des Endlosbands nachgelagerte Einrichtung zum Abheben des zumindest teilweise erstarrten Werkstoffs sowie eine mit der Bandgießanlage fix verbundene Reinigungseinrichtung. Des Weiteren betrifft die Erfindung ein Verfahren zum Betrieb einer Bandgießanlage, bei dem ein Endlosband in zumindest einer Hauptbewegungsrichtung bewegt wird, ein flüssiger oder pastöser Werkstoff auf das genannte Endlosband aufgetragen wird, der zumindest teilweise erstarrte Werkstoff vom Endlosband abgehoben wird und eine mit der Bandgießanlage fix verbundene Reinigungseinrichtung wenigstens zeitweises aktiviert wird.

Bandgießanlagen der genannten Art sind grundsätzlich bekannt und werden in der Regel für die Herstellung plattenförmiger oder filmartiger Werkstoffe eingesetzt. Beispielsweise werden sie zur Herstellung von Filmen für die Fotografie, LCD-Bildschirmen oder aber von Kunststein ("Engineered Stone") verwendet. Dabei wird ein flüssiger oder pastöser Werkstoff auf ein angetriebenes/bewegtes Band aufgetragen und der zumindest teilweise erstarrte Werkstoff abgehoben. Beispielsweise kann ein flüssiger Film auf das Endlosband gegossen werden, unterschiedliche Prozesse wie Erwärmen, Dehnen, Trocknen etc. durchlaufen und anschließend vom Band abgeschabt oder abgehoben/abgezogen werden oder sich einfach von selbst vom Band lösen.

Bei derartigen Bandgießanlagen kann es zu prozessbedingten Verschmutzungen der Endlosbänder kommen, was Reinigungsarbeiten erforderlich macht. Stillstandszeiten und damit verbundene finanzielle Einbußen sind die Folge.

Zu dieser Thematik offenbart beispielsweise die US 2009/302506 A1 eine Bandgießanlage mit einer Reinigungseinrichtung. Diese ist am Untertrum des Bands der Bandgießanlage angeordnet und ermöglicht die Reinigung desselben während der laufenden Produktion.

Weiterhin offenbart die WO 04/089594 A1 eine Bandgießanlage mit einer darauf wirkenden Metallbürste, mit deren Hilfe das Band der Bandgießanlage ebenfalls bei laufender Produktion gereinigt werden kann.

Es ist daher eine Aufgabe der vorliegenden Erfindung, eine weiter verbesserte Bandgießanlage, einen weiter verbesserten Produktionsprozess sowie eine weitere Verbesserung der Qualität des erzeugten Produkts zu ermöglichen. Insbesondere soll eine möglichst einfache und wartungsarme Reinigung sowie (Wieder)herstellung einer Oberflächengüte des Bandes ermöglicht werden.

Die Aufgabe der Erfindung wird mit einer Bandgießanlage der eingangs genannten Art gelöst, welche auch eine mit der Bandgießanlage fix verbundene Poliereinrichtung mit zumindest einem rotierenden Polierteller und/oder Schwingpolierer und/oder Exzenterpolierer umfasst.

Die Aufgabe der Erfindung wird auch mit einem Verfahren zum Betrieb einer Bandgießanlage der eingangs genannten Art gelöst, bei dem auch eine mit der Bandgießanlage fix verbundene Poliereinrichtung mit zumindest einem rotierenden Polierteller und/oder Schwingpolierer und/oder Exzenterpolierer wenigstens zeitweise aktiviert wird.

Vorteilhaft werden Reinigungs- und Wartungsarbeiten auf diese Weise wesentlich vereinfacht. In der Regel können diese Tätigkeiten im laufenden Betrieb beziehungsweise Regelbetrieb durchgeführt werden, das heißt während der Herstellung der plattenförmigen oder filmartigen Werkstoffe. Dadurch werden die Wirtschaftlichkeit einer Bandgießanlage sowie die Planbarkeit des Produktionsprozesses wesentlich verbessert. Durch die vereinfachte Möglichkeit, das Endlosband zu reinigen und zu polieren, wird es über einen längeren Zeitraum in optimalem Zustand gehalten und damit insgesamt die Produktqualität verbessert.

Durch die Verwendung zumindest eines rotierenden Poliertellers und/oder Schwingpolierers und/oder Exzenterpolierers werden zudem bewährte und erprobte Mittel für das Polieren eingesetzt. Die Bandgießanlage kann daher mit vergleichsweise geringem technischen Aufwand in die Praxis umgesetzt werden.

Als "Hauptbewegungsrichtung" wird im Rahmen der Erfindung jene Bewegungsrichtung des Endlosbands verstanden, in welcher die Herstellung der plattenförmigen oder filmartigen Werkstoffe erfolgt. Demgemäß ist dies jene Bewegungsrichtung des Endlosbands, in der das von der Auftragseinrichtung auf das Endlosband aufgetragene Material vom Endlosband über das Obertrum und/oder Untertrum zur Abhebeeinrichtung transportiert wird. Das "Obertrum" bezeichnet den oberen, tragenden Teil eines angetriebenen Endlosbands, wohingegen das "Untertrum" den unteren, nicht tragenden Teil des Endlosbands bezeichnet.

Eine mit der Bandgießanlage" fix verbundene" Reinigungseinrichtung und Poliereinrichtung ist im Rahmen der Erfindung eine Reinigungseinrichtung und Poliereinrichtung, die im Regelbetrieb mit der Bandgießanlage verbunden bleibt und - wenn überhaupt - lediglich in Ausnahmefallen, beispielsweise zu Wartungszwecken, von dieser getrennt wird. Zur Erfüllung ihrer Funktion brauchen sie daher im Normalfall lediglich aktiviert zu werden. "Fix verbunden" bedeutet unter anderem nicht, dass die Reinigungseinrichtung und Poliereinrichtung mit der Bandgießanlage beispielsweise verschweißt sein müsste und inkludiert unter anderem auch vom Endlosband wegschwenkbare Reinigungseinrichtungen und Poliereinrichtungen. Frei geführte Handgeräte sind jedoch keine" fix verbundenen" Reinigungseinrichtungen und Poliereinrichtungen im Sinne der Erfindung.

Der "Regelbetrieb" inkludiert das Reinigen und Polieren sowohl im laufenden Herstellungsprozess der plattenförmigen oder filmartigen Werkstoffe als auch in einer Pause desselben.

Weitere vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn die Reinigungseinrichtung und Poliereinrichtung während des Auftragens und Abhebens des Werkstoffs aktiviert wird. Dadurch braucht die Herstellung plattenförmiger oder filmartigen Werkstoffe für das Reinigen und Polieren nicht unterbrochen zu werden. Das Reinigen und Polieren kann somit auf besonders wirtschaftliche Weise erfolgen.

Besonders vorteilhaft ist es auch, wenn die Reinigungseinrichtung und Poliereinrichtung bei pausiertem Auftragen und Abheben des Werkstoffs aktiviert wird. Dadurch kann das Reinigen und Polieren vom Herstellungsprozess plattenförmiger oder filmartiger Werkstoffe unabhängig, beispielsweise bei unterschiedlicher Bandgeschwindigkeit, erfolgen.

Günstig ist es, wenn das Auftragen und Abheben des Werkstoffs sowie das Reinigen und Polieren in der Hauptbewegungsrichtung des Endlosbands erfolgt Auf diese Weise braucht die Bewegungsrichtung des Endlosbands zwischen dem Reinigen/Polieren und dem Herstellungsprozess plattenförmiger/filmartiger Werkstoffe nicht geändert werden. Zudem kann das Reinigen und Polieren gleichzeitig mit der Herstellung der genannten Werkstoffe erfolgen.

Günstig ist es auch, wenn das Reinigen und Polieren in einer der Hauptbewegungsrichtung des Endlosbands entgegengesetzten Richtung erfolgt. Unter Umständen kann so das Reinigen und Polieren einfacher durchgeführt werden. Insbesondere ist es denkbar, dass eine Reinigungseinrichtung einer Poliereinrichtung bauartbedingt in Bezug auf die Hauptbewegungsrichtung des Endlosbands nur nachgelagert werden kann, jedoch zur Vorreinigung vor dem Polieren eingesetzt werden soll. Umgekehrt ist es auch denkbar, dass eine Reinigungseinrichtung einer Poliereinrichtung in Bezug auf die Hauptbewegungsrichtung des Endlosbands bauartbedingt nur vorgelagert werden kann, jedoch zur Nachreinigung nach dem Polieren eingesetzt werden soll.

Günstig ist es zudem, wenn das Endlosband
- gereinigt und danach poliert oder
- poliert und danach gereinigt oder
- vorgereinigt, danach poliert und danach endgereinigt wird. Günstig ist es in diesem Zusammenhang auch, wenn
- die Reinigungseinrichtung der Poliereinrichtung in der Hauptbewegungsrichtung des Endlosbands vorgelagert ist oder
- die Reinigungseinrichtung der Poliereinrichtung in der Hauptbewegungsrichtung des Endlosbands nachgelagert ist oder
- die Poliereinrichtung zwischen zwei Reinigungseinrichtungen angeordnet ist.

Vorteilhaft wird beim (Vor)reinigen vor dem Poliervorgang vermieden, dass Schmutzpartikel auf dem Endlosband das Polierergebnis beeinträchtigen, insbesondere die Oberfläche des Endlosbands zerkratzen. Bei einer Reinigung des Endlosbands nach dem Polieren wird dagegen vermieden, dass auf dem Endlosband verbliebenes Poliermittel die Herstellung plattenförmiger oder filmartiger Werkstoffe beeinträchtigt. Wird vorgereinigt, poliert und danach endgereinigt, so werden die Vorteile der genannten Ausführungsvarianten kombiniert. Somit können weder Schmutzpartikel auf dem Endlosband das Polierergebnis beeinträchtigen noch das Poliermittel die Herstellung plattenförmiger oder filmartiger Werkstoffe.

Besonders vorteilhaft ist es,
- wenn eine Vorreinigung und das Polieren des Endlosbands in einer ersten Bewegungsrichtung des Endlosbands und eine Endreinigung desselben in einer der ersten Bewegungsrichtung entgegengesetzten Richtung erfolgen oder
- wenn eine Vorreinigung des Endlosbands in einer ersten Bewegungsrichtung des Endlosbands und das Polieren und eine Endreinigung desselben in einer der ersten Bewegungsrichtung entgegengesetzten Richtung erfolgen.
Auf diese Weise kann die Reinigungseinrichtung sowohl für die Vorreinigung als auch für die Endreinigung eingesetzt werden. Die Bandgießanlage kann somit besonders kostengünstig hergestellt werden.

Besonders vorteilhaft ist auch eine Ausführungsvariante, in der die Reinigungseinrichtung und Poliereinrichtung der Abhebeeinrichtung in der Hauptbewegungsrichtung des Endlosbands nachgelagert respektive der Auftragseinrichtung in der genannten Hauptbewegungsrichtung vorgelagert ist. Somit ist die "Herstellungszone" für die plattenförmigen oder filmartigen Werkstoffe, also der Bereich zwischen der Auftragseinrichtung und der Abhebeeinrichtung, frei von einer Reinigungseinrichtung und Poliereinrichtung. Somit können bestehende Bandgießanlagen mit vergleichsweise geringem technischen Aufwand mit einer Reinigungseinrichtung und Poliereinrichtung erweitert werden. Durch die spezielle Anordnung der Reinigungseinrichtung und Poliereinrichtung können diese auch während des Auftragens und Abhebens des Werkstoffs aktiviert werden.

Günstig ist es auch, wenn die Poliereinrichtung am Obertrum des Endlosbands angeordnet ist. Dadurch kann das Poliermittel leicht auf das Endlosband aufgetragen werden.

In einer weiteren vorteilhaften Variante der Bandgießanlage ist die Reinigungseinrichtung am Untertrum des Endlosbands angeordnet. Dadurch wird am Obertrum kein Platz für die Reinigungseinrichtung benötigt, sondern steht ganz oder weitgehend für die Herstellung der plattenförmigen oder filmartigen Werkstoffe zur Verfügung. Zudem kann überschüssige respektive mit Schmutz versetzte Reinigungsflüssigkeit leicht vom Endlosband abfließen.

Besonders vorteilhaft ist es, wenn die Reinigungseinrichtung und die Poliereinrichtung am Untertrum des Endlosbands angeordnet sind. Auf diese Weise steht das gesamte Obertrum für die Herstellung der plattenförmigen oder filmartigen Werkstoffe zur Verfügung, auch wenn eine Reinigungseinrichtung und eine Poliereinrichtung eingesetzt wird. Dadurch kann die Bandgießanlage besonders kompakt aufgebaut werden.

Vorteilhaft ist es, wenn die Reinigungseinrichtung eine mit einer Flüssigkeit gefüllte und mit einem Ultraschallgeber ausgerüstete Wanne umfasst, durch welche das Endlosband geführt ist Mit Hilfe des Ultraschall-Reinigungsverfahrens kann das Endlosband besonders schonend gereinigt werden, insbesondere ohne den Einsatz von Festkörpern und insbesondere ohne den Einsatz von Bürsten. Das Endlosband weist bei dieser Ausführungsvariante daher eine besonders hohe Standzeit auf.

Vorteilhaft ist es weiterhin, wenn die Reinigungseinrichtung Sprühdüsen zum Aufsprühen einer Reinigungsflüssigkeit und/oder Reinigungsbürsten und/oder eine Abziehlippe und/oder eine Luftklinge umfasst. Mit Hilfe von Sprühdüsen kann eine Reinigungsflüssigkeit großflächig und gleichmäßig aufgetragen werden. Bürsten gewährleisten eine gute Reinigungswirkung, auch bei stark verschmutztem Endlosband, und eine Abziehlippe (beispielsweise aus Gummi) sorgt dafür, dass die Reinigungsflüssigkeit und der Schmutz praktisch restlos vom Endlosband wieder entfernt werden. Anstelle einer das Endlosband berührenden Abziehlippe oder zusätzlich dazu kann auch ein Luftstrahl eingesetzt werden, welcher die Reinigungsflüssigkeit und den Schmutz vom Endlosband berührungslos entfernt. Solche Luftstrahlen sind auch unter dem Begriff "Luftklinge" beziehungsweise "air knife" bekannt.

Günstig ist es in schließlich, wenn der zumindest eine rotierende Polierteller und/oder Schwingpolierer und/oder Exzenterpolierer quer zur Bewegungsrichtung des Endlosbands bewegbar ist. Auf diese Weise kann das Endlosband auch mit einem vergleichsweise kleinen Polierteller und/oder Schwingpolierer und/oder Exzenterpolierer poliert werden, das heißt die Polierfläche muss nicht die gesamte Breite des Endlosbands umspannen, wodurch auch die für die Poliereinrichtung nötige Antriebsleistung relativ gering ist.

An dieser Stelle wird angemerkt, dass die zur Bandgießanlage genannten Varianten und die daraus resultierenden Vorteile sinngemäß auch auf das Verfahren zum Betrieb einer Bandgießanlage anwendbar sind und umgekehrt.

Zum besseren Verständnis der Erfindung wird diese anhand der nachfolgenden Figuren näher erläutert. Es zeigen:
- Fig. 1: eine erste schematisch dargestellte Variante einer Bandgießanlage in Unteransicht und Seitenansicht;
- Fig. 2: eine Variante einer Bandgießanlage mit Reinigungseinrichtung und Poliereinrichtung am Untertrum;
- Fig. 3: eine Variante einer Bandgießanlage mit einer Poliereinrichtung, welche zwischen zwei Reinigungseinrichtungen angeordnet ist und
- Fig. 4: eine Variante einer Bandgießanlage mit einer Ultraschallreinigungseinrichtung und einer Poliereinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereicben in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

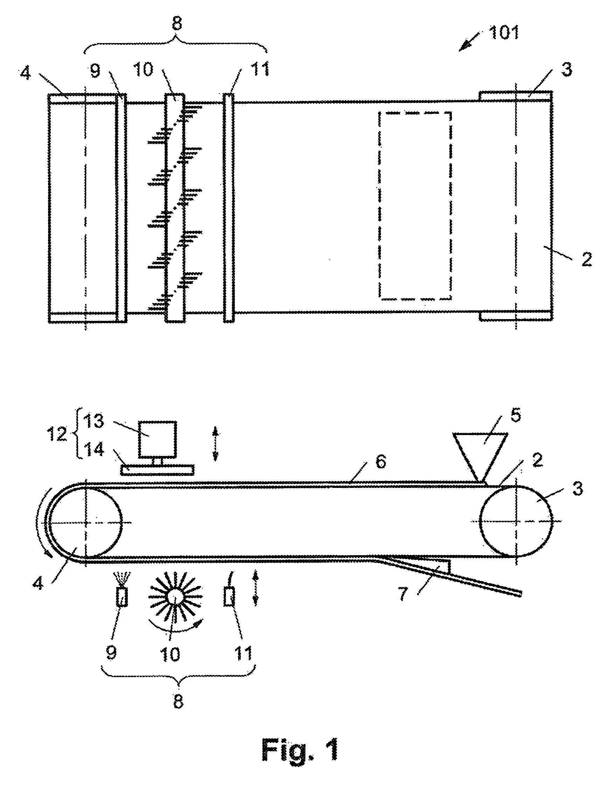

Fig. 1 zeigt ein erstes Beispiel einer schematisch dargestellten Bandgießanlage 101 in Unteransicht und Seitenansicht. Die Bandgießanlage 101 umfasst ein Endlosband 2 aus Metall, das über zwei Rollen 3 und 4 geführt ist. Weiterhin umfasst die Bandgießanlage 101 einen nicht explizit dargestellten Antrieb zum Bewegen des Endlosbands 2 in zumindest einer Hauptbewegungsrichtung, welche mit einem Pfeil visualisiert ist Beispielsweise kann der Antrieb eine der Rollen 3 oder 4 oder beide Rollen 3 und 4 antreiben. Zudem umfasst die Bandgießanlage 101 eine Einrichtung 5 zum Auftragen eines flüssigen oder pastösen Werkstoffes 6 auf das genannte Endlosband 2, sowie eine der Auftragseinrichtung 5 in der Hauptbewegungsrichtung des Endlosbands 2 nachgelagerte Einrichtung 7 zum Abheben des zumindest teilweise erstarrten Werkstoffs 6. Die Auftragseinrichtung 5 ist in diesem Beispiel als Trichter, die Abhebeeinrichtung 7 als Keil ausgebildet Selbstverständlich sind auch andere an sich bekannte Auftragseinrichtungen 5 und Abhebeeinrichtungen 7 einsetzbar.

Weiterhin umfasst die Bandgießanlage 101 eine mit dieser fix verbundene Reinigungseinrichtung 8, welche in diesem Fall beispielhaft Sprühdüsen 9 zum Aufsprühen einer Reinigungsflüssigkeit, eine Reinigungsbürste 10 und eine Abziehlippe 11 umfasst. Mit Hilfe der Sprühdüsen 9 kann eine Reinigungsflüssigkeit großflächig und gleichmäßig aufgetragen werden, die Reinigungsbürste 10 gewährleistet eine gute Reinigungswirkung auch bei stark verschmutztem Endlosband 2, und die Abziehlippe 11 (beispielsweise aus Gummi) sorgt dafür, dass die Reinigungsflüssigkeit und der Schmutz praktisch restlos vom Endlosband 2 wieder entfernt werden. Vorteilhaft ist es, wenn die Reinigungseinrichtung 8 wie in der Fig. 1 dargestellt am Untertrum des Endlosbands 2 angeordnet ist Dadurch kann überschüssige respektive mit Schmutz versetzte Reinigungsflüssigkeit leicht vom Endlosband 2 abfließen.

Schließlich umfasst die Bandgießanlage 101 auch eine Poliereinrichtung 12, welche in diesem Beispiel einen von einem Motor 13 angetriebenen Polierteller 14 umfasst. Beispielsweise kann die Poliereinrichtung 12 als rotierender Polierteller und/oder Schwingpolierer und/oder Exzenterpolierer ausgebildet sein. Vorteilhaft ist es, wenn die Poliereinrichtung 12 wie in der Fig. 1 dargestellt am Obertrum des Endlosbands 2 angeordnet ist. Dadurch kann das Poliermittel leicht auf das Endlosband 2 aufgetragen werden.

Ein Verfahren zum Betrieb einer Bandgießanlage 101, umfasst nun die Schritte:
- Bewegen des Endlosbands 2 in zumindest einer Hauptbewegungsrichtung,
- Auftragen eines flüssigen oder pastösen Werkstoffes 6 auf das genannte Endlosband 2 und
- Abheben des zumindest teilweise erstarrten Werkstoffs 6 vom Endlosband 2, wobei die mit der Bandgießanlage 101 fix verbundene Reinigungseinrichtung 8 und Poliereinrichtung 12 wenigstens zeitweise aktiviert wird.

Konkret wird die Reinigungseinrichtung 8 und die Poliereinrichtung 12 in diesem Beispiel bei pausiertem Auftragen und Abheben des Werkstoffs 6 aktiviert, das heißt die Herstellung des plattenförmigen oder filmartigen Werkstoffs 6 wird für das Reinigen und Polieren unterbrochen. Dadurch kann das Reinigen und Polieren vom die Herstellungsprozess des plattenförmigen oder filmartigen Werkstoffs 6 unabhängig erfolgen.

Zum Reinigen wird die während der Herstellung des plattenförmigen oder filmartigen Werkstoffs 6 vom Endlosband 2 abgehobene Reinigungseinrichtung 8 gegen das Endlosband 2 gedrückt. Gleichermaßen wird die während der Herstellung des plattenförmigen oder filmartigen Werkstoffs 6 vom Endlosband 2 abgehobene Poliereinrichtung 12 für den Poliervorgang gegen das Endlosband 2 gedrückt. Das Reinigen und Polieren kann hintereinander oder gleichzeitig erfolgen. Weiterhin ist es denkbar, dass die Module der Reinigungseinrichtung 8 (in diesem Beispiel konkret die Sprühdüsen 9, die Reinigungsbürste 10 und die Abziehlippe 11) hintereinander oder gleichzeitig aktiviert werden. Dasselbe gilt für den Polierteller 14 und einen Poliermittelauftrag (erfolgt in diesem Beispiel direkt über eine Bohrung im Polierteller 14).

In diesem Beispiel wird angenommen dass das Reinigen und Polieren in der Hauptbewegungsrichtung des Endlosbands 2, also in derselben Bewegungsrichtung des Endlosbands 2 wie beim Herstellungsprozess des plattenförmigen oder filmartigen Werkstoffs 6 erfolgt. Auf diese Weise braucht die Bewegungsrichtung des Endlosbands 2 zwischen dem Reinigen/Polieren und dem Herstellungsprozess plattenförmiger/filmartiger Werkstoffe nicht geändert werden. Denkbar ist natürlich auch, dass das Reinigen und Polieren in einer der Hauptbewegungsrichtung des Endlosbands 2 entgegengesetzten Richtung erfolgt.

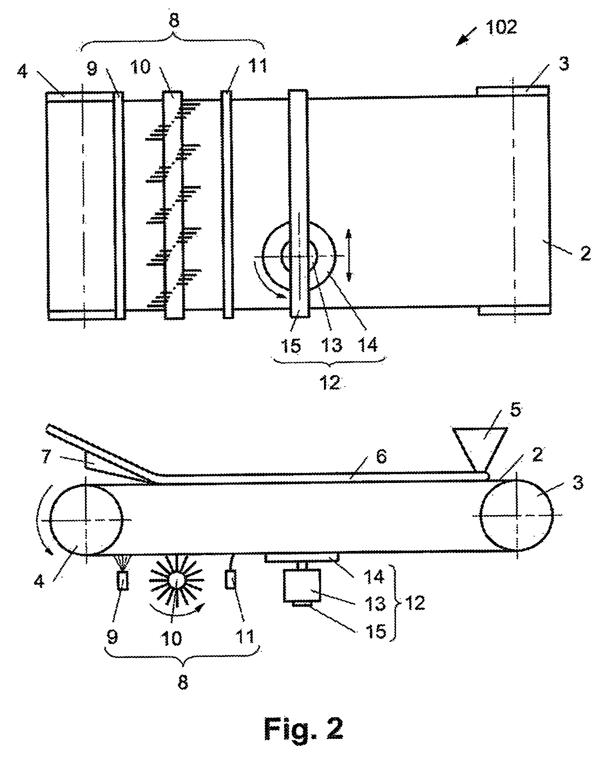

Fig. 2 zeigt nun eine alternative beispielhafte und rein schematisch dargestellte Bandgießanlage 102, bei der die Reinigungseinrichtung 8 und die Poliereinrichtung 12 am Untertrum des Endlosbands 2 angeordnet sind. Das Obertrum wird dagegen für die Herstellung des plattenförmigen oder filmartigen Werkstoffs 6 benutzt. Dabei ist sowohl der Trichter 5 als auch die Abhebeeinrichtung 7 am Obertrum angeordnet, was insbesondere für die Herstellung vergleichsweiser dicker und/oder wenig flexibler plattenförmiger Werkstoffe 6 geeignet ist.

In der gezeigten Anordnung sind die Reinigungseinrichtung 8 und die Poliereinrichtung 12 überdies der Abhebeeinrichtung 7 in der Hauptbewegungsrichtung des Endlosbands 2 nachgelagert, respektive der Auftragseinrichtung 5 in der genannten Hauptbewegungsrichtung vorgelagert. Somit ist die "Herstellungszone" für den plattenförmigen oder filmartigen Werkstoff 6, also der Bereich zwischen der Auftragseinrichtung 5 und der Abhebeeinrichtung 7, frei von einer Reinigungseinrichtung 8 und einer Poliereinrichtung 12. Somit können bestehende Bandgießanlagen mit vergleichsweise geringem technischen Aufwand mit einer Reinigungseinrichtung 8 und Poliereinrichtung 12 erweitert werden. Durch die spezielle Anordnung der Reinigungseinrichtung 8 und Poliereinrichtung 12 können diese auch während des Auftragens und Abhebens des Werkstoffs aktiviert werden. Zudem können die Reinigungseinrichtung 8 und die Poliereinrichtung 12 das Endlosband 2 ständig berühren, auch wenn diese nicht eingeschaltet sind. Eine spezielle Mechanik zum Abheben vom Endlosband 2 und zum Absenken auf das Endlosband 2 kann daher entfallen.

Durch die spezielle Anordnung steht das gesamte Obertrum für die Herstellung des plattenförmigen oder filmartigen Werkstoffs 6 zur Verfügung, auch wenn die Reinigungseinrichtung 8 und die Poliereinrichtung 12 das Endlosband 2 berühren. Deswegen kann die Reinigungseinrichtung 8 und Poliereinrichtung 12 auch während des Auftragens und Abhebens des Werkstoffs 6 aktiviert werden. Dadurch braucht die Herstellung des plattenförmigen oder filmartigen Werkstoffs 6 für das Reinigen und Polieren nicht unterbrochen zu werden. Das Reinigen und Polieren kann somit auf besonders wirtschaftliche Weise erfolgen.

Aus der Fig. 2 ist auch ersichtlich, dass der Polierteller 14 entlang einer Schiene 15 quer zur Bewegungsrichtung des Endlosbands 2 bewegbar ist. Auf diese Weise kann das Endlosband 2 auch mit einem vergleichsweise kleinen Polierteller 14 poliert werden, das heißt die Polierfläche muss nicht die gesamte Breite des Endlosbands 2 umspannen, wodurch auch die für die Poliereinrichtung nötige Antriebsleistung relativ gering ist.

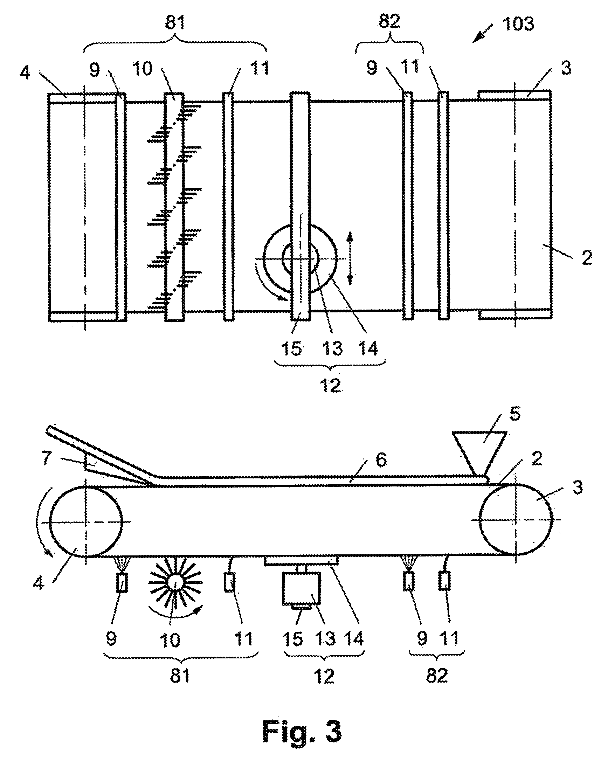

Fig. 3 zeigt ein weiteres schematisch dargestelltes Beispiel für eine Bandgießanlage 103, welche der Bandgießanlage 102 sehr ähnlich ist. Im Unterschied dazu ist die Poliereinrichtung 12 aber zwischen zwei Reinigungseinrichtungen 81 und 82 angeordnet. Die Reinigungseinrichtung 82 umfasst dabei beispielhaft eine Sprüheinrichtung 9 und eine Abziehlippe 11.

Vorteilhaft wird beim (Vor)reinigen durch die Reinigungseinrichtung 81 vor dem Poliervorgang vermieden, dass Schmutzpartikel auf dem Endlosband 2 das Polierergebnis beeinträchtigen, insbesondere die Oberfläche des Endlosbands 2 zerkratzen. Durch die Reinigung des Endlosbands 2 mit Hilfe der Reinigungseinrichtung 82 nach dem Polieren wird dagegen vermieden, dass auf dem Endlosband 2 verbliebenes Poliermittel die Herstellung des plattenförmigen oder filmartigen Werkstoffs 6 beeinträchtigt. Somit können Vorreinigung, Poliervorgang und Endreinigung synchron in einem Arbeitsgang und sogar während des Herstellvorgangs für den plattenförmigen oder filmartigen Werkstoff 6 in der Hauptbewegungsrichtung erfolgen. Selbstverständlich kann die Bewegungsrichtung des Endlosbands 2 zum Reinigen und Polieren auch umgekehrt werden.

Insbesondere ist es bei der Bandgießanlage 102 aus Fig. 2, bei der die Reinigungseinrichtung 8 der Poliereinrichtung 12 in der Hauptbewegungsrichtung des Endlosbands 2 vorgelagert ist, auch von Vorteil, wenn eine Vorreinigung und das Polieren des Endlosbands 2 in einer ersten Bewegungsrichtung des Endlosbands 2 (hier in der Hauptbewegungsrichtung) und eine Endreinigung desselben in einer der ersten Bewegungsrichtung entgegengesetzten Richtung erfolgen. Die (einzige) Reinigungseinrichtung 8 wird dabei hintereinander sowohl für die Vorreinigung als auch für die Endreinigung eingesetzt. Für die Endreinigung wird die Poliervorrichtung 12 deaktiviert beziehungsweise sogar vom Endlosband 2 abgehoben.

Denkbar ist auch, dass eine Vorreinigung des Endlosbands 2 in einer ersten Bewegungsrichtung des Endlosbands 2 (hier wiederum in der Hauptbewegungsrichtung) und das Polieren und eine Endreinigung desselben in einer der ersten Bewegungsrichtung entgegengesetzten Richtung erfolgen. In diesem Fall wird die Poliervorrichtung 12 für die Vorreinigung deaktiviert beziehungsweise vom Endlosband 2 abgehoben.

Denkbar ist auch, dass für die Vor- oder Endreinigung einzelne Module der Reinigungseinrichtung 8 deaktiviert werden. Beispielsweise kann die Bürste 10 für bei der Endreinigung deaktiviert und insbesondere auch vom Endlosband 2 abgehoben werden.

Generell gilt das oben Gesagte bei umgekehrten Bewegungsrichtungen auch für eine Bandgießanlage bei der die Reinigungseinrichtung der Poliereinrichtung in der Hauptbewegungsrichtung des Endlosbands nicht vorgelagert sondern nachgelagert ist.

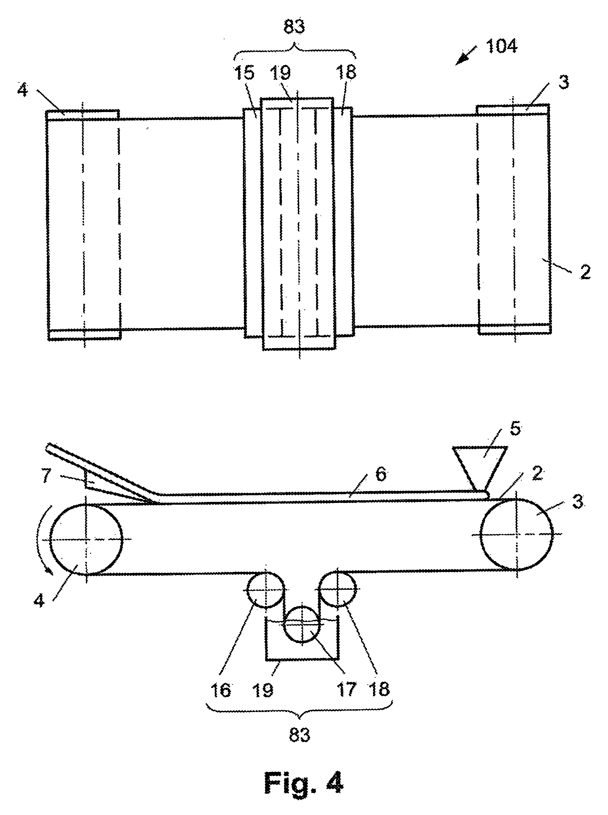

Fig. 4 zeigt schließlich eine Bandgießanlage 104, bei der die Reinigungseinrichtung 83 eine mit einer Flüssigkeit gefüllte und mit einem Ultraschallgeber ausgerüstete Wanne 19 umfasst, durch welche das Endlosband 2 geführt ist. Beispielhaft wird das Endlosband 2 mit Hilfe von drei Umlenkrollen 16..18 durch die Wanne 19 geführt Mit Hilfe des Ultraschall-Reinigungsverfahrens kann das Endlosband 2 besonders schonend gereinigt werden, insbesondere ohne Berührung durch Festkörper und insbesondere ohne den Einsatz von Bürsten 10. Das Endlosband 2 weist bei dieser Ausführungsvariante daher eine besonders hohe Standzeit auf.

Bei der dargestellten Variante berühren die Umlenkrollen 16 und 18 das Endlosband 2 auf dessen Außenseite, wodurch es unter Umständen zu Beschädigungen derselben kommen kann. In einer weiteren vorteilhaften Ausgestaltung kann daher vorgesehen sein, dass die Umlenkrollen 16 und 18 entfallen und lediglich die Umlenkrolle 17 vorgesehen ist. In diesem Fall verläuft das Untertrum des Endlosbands 2 schräg von den Rollen 3, 4 zur Umlenkrolle 17. Die Wanne 19 wäre dann gegebenenfalls länger auszuführen. Denkbar wäre schließlich auch, dass die Umlenkrolle 17 weggelassen wird und das gesamte Untertrum in der dann entsprechend vergrößerten Wanne 19 läuft.

In der Darstellung der Fig. 4 ist für die Bandgießanlage 104 keine Poliereinrichtung gezeigt. Der Vollständigkeit halber wird aber darauf hingewiesen, dass auch die Bandgießanlage 104 eine Poliereinrichtung umfasst. Des Weiteren wird darauf hingewiesen, dass auch bei den Bandgießanlagen 101..103 die Reinigungseinrichtung 8 und die Poliereinrichtung 12 anders aufgebaut sein können.

Generell kann anstelle einer Abziehlippe 11 oder zusätzlich dazu eine Luftklinge ("air knife") eingesetzt werden. Vorteilhaft erfolgt das Entfernen der Reinigungsflüssigkeit und des Schmutzes vom Endlosband 2 dadurch berührungslos und somit schonend. Daher ist der Einsatz einer Luftklinge insbesondere bei einer Ausführungsvariante nach Fig. 4 von Vorteil, wenn das Endlosband 2 von einer der Wanne 19 nachgeschalteten Luftklinge kombiniert wird. Dadurch kann das Endlosband 2 nicht nur besonders schonend mit Hilfe einer Reinigungsflüssigkeit gereinigt, sondern auch besonders schonend wieder von dieser befreit werden.

Die Ausführungsbeispiele zeigen mögliche Ausführungsvarianten einer erfindungsgemäßen Bandgießanlage 101..104, wobei an dieser Stelle bemerkt sei, dass die Erfindung nicht auf die speziell dargestellten Ausführungsvarianten desselben/derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt Es sind also auch sämtliche denkbaren Ausführungsvarianten, die durch Kombinationen einzelner Details der dargestellten und beschriebenen Ausführungsvariante möglich sind, vom Schutzumfang mit umfasst

Beispielsweise kann die Reinigungseinrichtung 83 der Bandgießanlage 104 auch Bestandteile der Reinigungseinrichtung 8 der Bandgießanlage 102 umfassen. Generell können die Reinigungseinrichtung 8 und die Poliereinrichtung 12 wahlweise am Obertrum oder Untertrum des Endlosbands 2 angeordnet werden. Darüber hinaus ist es auch möglich, dass einige Bestandteile der Reinigungseinrichtung 8 am Obertrum, andere am Untertrum angeordnet sind. Dasselbe gilt sinngemäß für die Poliereinrichtung 12.

Insbesondere wird auch festgehalten, dass die dargestellten Vorrichtungen in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

## Patentansprüche

1. Verfahren zum Betrieb einer Bandgießanlage (101..104), umfassend die Schritte:
- Bewegen eines Endlosbands (2) in zumindest einer Hauptbewegungsrichtung,
- Auftragen eines flüssigen oder pastösen Werkstoffes (6) auf das genannte Endlosband (2),
- Abheben des zumindest teilweise erstarrten Werkstoffs (6) vom Endlosband (2) und
- wenigstens zeitweises Aktivieren einer mit der Bandgießanlage (101..104) fix verbundenen Reinigungseinrichtung (8, 81..83),
**dadurch gekennzeichnet, dass**
auch eine mit der Bandgießanlage (101..104) fix verbundene Poliereinrichtung (12) mit zumindest einem rotierenden Polierteller und/oder Schwingpolierer und/oder Exzenterpolierer wenigstens zeitweise aktiviert wird.

2. Verfahren nach Anspruch 1, **dadurch gekennzeichnet, dass** die Reinigungseinrichtung (8, 81..83) und Poliereinrichtung (12) während des Auftragens und Abhebens des Werkstoffs (6) aktiviert wird.

3. Verfahren nach Anspruch 1, **dadurch gekennzeichnet, dass** die Reinigungseinrichtung (8, 81..83) und Poliereinrichtung (12) bei pausiertem Auftragen und Abheben des Werkstoffs (6) aktiviert wird.

4. Verfahren nach einem der Ansprüche 1 bis 3, **dadurch gekennzeichnet, dass** das Auftragen und Abheben des Werkstoffs (6) sowie das Reinigen und Polieren in der Hauptbewegungsrichtung des Endlosbands (2) erfolgt.

5. Verfahren nach einem der Ansprüche 1 bis 3, **dadurch gekennzeichnet, dass** das Reinigen und Polieren in einer der Hauptbewegungsrichtung des Endlosbands (2) entgegengesetzten Richtung erfolg

6. Verfahren nach einem der Ansprüche 1 bis 5, **dadurch gekennzeichnet, dass** das Endlosband (2)
- gereinigt und danach poliert oder
- poliert und danach gereinigt oder
- vorgereinigt, danach poliert und danach endgereinigt wird.

7. Verfahren nach Anspruch 6, **dadurch gekennzeichnet,**
- **dass** eine Vorreinigung und das Polieren des Endlosbands (2) in einer ersten Bewegungsrichtung des Endlosbands (2) und eine Endreinigung desselben in einer der ersten Bewegungsrichtung entgegengesetzten Richtung erfolgen oder
- **dass** eine Vorreinigung des Endlosbands (2) in einer ersten Bewegungsrichtung des Endlosbands (2) und das Polieren und eine Endreinigung desselben in einer der ersten Bewegungsrichtung entgegengesetzten Richtung erfolgen.

8. Bandgießanlage (101..104), umfassend:
- ein Endlosband (2) aus Metall,
- einen Antrieb zum Bewegen des Endlosbands (2) in zumindest einer Hauptbewegungsrichtung,
- eine Einrichtung (5) zum Auftragen eines flüssigen oder pastösen Werkstoffes (6) auf das genannte Endlosband (2),
- eine der Auftragseinrichtung (5) in der Hauptbewegungsrichtung des Endlosbands (2) nachgelagerte Einrichtung (7) zum Abheben des zumindest teilweise erstarrten Werkstoffs (6) und
- eine mit der Bandgießanlage (101..104) fix verbundene Reinigungseinrichtung (8, 81..83),
**gekennzeichnet durch**
eine mit der Bandgießanlage (101..104) fix verbundene Poliereinrichtung (12) mit zumindest einem rotierenden Polierteller und/oder Schwingpolierer und/oder Exzenterpolierer.

9. Bandgießanlagen (101..104) nach Anspruch 8, **dadurch gekennzeichnet, dass** die Reinigungseinrichtung und Poliereinrichtung der Abhebeeinrichtung in der Hauptbewegungsrichtung des Endlosbands nachgelagert respektive der Auftragseinrichtung in der genannten Hauptbewegungsrichtung vorgelagert ist.

10. Bandgießanlage (101..104) nach Anspruch 8 oder 9, **dadurch gekennzeichnet, dass** die Poliereinrichtung (12) am Obertrum des Endlosbands (2) angeordnet ist.

11. Bandgießanlage (101..104) nach einem der Ansprüche 8 bis 10, **dadurch gekennzeichnet, dass** die Reinigungseinrichtung (8, 81..83) am Untertrum des Endlosbands (2) angeordnet ist.

12. Bandgießanlage (101..104) nach Anspruch 11, **dadurch gekennzeichnet, dass** die Reinigungseinrichtung (8, 81..83) und die Poliereinrichtung (12) am Untertrum des Endlosbands (2) angeordnet sind.

13. Bandgießanlage (101..104) nach einem der Ansprüche 8 bis 12, **dadurch gekennzeichnet, dass**
- die Reinigungseinrichtung (8, 81..83) der Poliereinrichtung (12) in der Hauptbewegungsrichtung des Endlosbands (2) vorgelagert ist oder
- die Reinigungseinrichtung (8, 81..83) der Poliereinrichtung (12) in der Hauptbewegungsrichtung des Endlosbands (2) nachgelagert ist oder
- die Poliereinrichtung (12) zwischen zwei Reinigungseinrichtungen (81, 82) angeordnet ist.

14. Bandgießanlage (101..104) nach einem der Ansprüche 8 bis 13, **dadurch gekennzeichnet, dass** die Reinigungseinrichtung (94) eine mit einer Flüssigkeit gefüllte und mit einem Ultraschallgeber ausgerüstete Wanne (19) umfasst, durch welche das Endlosband (2) geführt ist

15. Bandgießanlage (101..104) nach einem der Ansprüche 8 bis 14, **dadurch gekennzeichnet, dass** die Reinigungseinrichtung (8,81..83) Sprühdüsen (9) zum Aufsprühen einer Reinigungsflüssigkeit und/oder Reinigungsbürsten (10) und/oder eine Abziehlippe (11) und/oder eine Luftklinge umfasst.

16. Bandgießanlage (101..104) nach einem der Ansprüche 8 bis 15, **dadurch gekennzeichnet, dass** der zumindest eine rotierende Polierteller und/oder Schwingpolierer und/oder Exzenterpolierer quer zur Bewegungsrichtung des Endlosbands (2) bewegbar ist.

## Claims

1. Method for operating a strip casting installation (101...104) comprising the steps:
- moving an endless belt (2) in at least one main direction of movement,
- applying a liquid or pasty material (6) to the aforementioned endless belt (2),
- lifting off the at least partially solidified material (6) from the endless belt (2) and
- activating a cleaning device (8, 81...83) fixedly connected to the strip casting installation (101...104) at least at certain times,
**characterised in that**
a polishing device (12) fixedly connected to the strip casting installation (101...104) and having at least one rotating polishing plate and/or vibrating polisher and/or eccentric polisher is also activated at least at certain times.

2. Method according to claim 1, **characterised in that** the cleaning device (8, 81...83) and polishing device (12) are activated when the material (6) is applied and lifted off.

3. Method according to claim 1, **characterised in that** the cleaning device (8, 81...83) and polishing device (12) are activated when the procedure for applying and lifting off the material (6) is paused.

4. Method according to one of claims 1 to 3, **characterised in that** the application and lifting-off of the material (6) and the cleaning and polishing take place in the main direction of movement of the endless belt (2).

5. Method according to one of claims 1 to 3, **characterised in that** the cleaning and polishing take place in a direction opposing the main direction of movement of the endless belt (2).

6. Method according to one of claims 1 to 5, **characterised in that** the endless belt (2)
- is cleaned and subsequently polished or
- polished and subsequently cleaned or
- pre-cleaned, subsequently polished and then finally cleaned.

7. Method according to claim 6, **characterised in**
- **that** a pre-cleaning and the polishing of the endless belt (2) take place in a first direction of movement of the endless belt (2) and a final cleaning thereof takes place in a direction opposing the first direction of movement or
- **that** a pre-cleaning of the endless belt (2) takes place in a first direction of movement of the endless belt (2) and the polishing and final cleaning thereof take place in a direction opposing the first direction of movement.

8. Strip casting installation (101... 104) comprising:
- an endless belt (2) made of metal,
- a drive for moving the endless belt (2) in at least one main direction of movement,
- a device (5) for applying a liquid or pasty material (6) onto the aforementioned endless belt (2),
- a device (7) mounted downstream of the application device (5) in the main direction of movement of the endless belt (2) for lifting off the at least partially solidified material (6) and
- a cleaning device (8, 81...83) fixedly connected to the strip casting installation (101...104),
**characterised by** a polishing device (12) fixedly connected to the strip casting installation (101... 104) and having at least one rotating polishing plate and/or vibrating polisher and/or eccentric polisher.

9. Strip casting installation (101... 104) according to claim 8, **characterised in that** the cleaning device and polishing device are mounted downstream of the lifting-off device in the main direction of movement of the endless belt respectively upstream of the application device in the aforementioned main direction of movement.

10. Strip casting installation (101...104) according to claim 8 or 9, **characterised in that** the polishing device (12) is arranged on the upper strand of the endless belt (2).

11. Strip casting installation (101...104) according to one of claims 8 to 10, **characterised in that** the cleaning device (8, 81...83) is arranged on the lower strand of the endless belt (2).

12. Strip casting installation (101...104) according to claim 11, **characterised in that** the cleaning device (8, 81...83) and the polishing device (12) are arranged on the lower strand of the endless belt (2).

13. Strip casting installation (101...104) according to one of claims 8 to 12, **characterized in that**
- the cleaning device (8, 81... 83) is mounted upstream of the polishing device (12) in the main direction of movement of the endless belt (2) or
- the cleaning device (8, 81...83) is mounted downstream of the polishing device (12) in the main direction of movement of the endless belt (2) or
- the polishing device (12) is arranged between two cleaning devices (81, 82).

14. Strip casting installation (101...104) according to one of claims 8 to 13, **characterised in that** the cleaning device (94) comprises a tank (19) filled with a liquid and provided with an ultrasound transmitter, the endless belt (2) being guided therethrough.

15. Strip casting installation (101...104) according to one of claims 8 to 14, **characterized in that** the cleaning device (8, 81...83) comprises spray nozzles (9) for spraying a cleaning fluid and/or cleaning brushes (10) and/or a scraper blade (11) and/or an air knife.

16. Strip casting installation (101...104) according to one of claims 8 to 15, **characterised in that** the at least one rotating polishing plate and/or vibrating polisher and/or eccentric polisher is able to be moved transversely to the direction of movement of the endless belt (2).

## Revendications

1. Procédé pour faire fonctionner une installation de coulée en bande (101..104), comprenant les étapes consistant à:
- déplacer une bande continue (2) dans au moins une direction de déplacement principale,
- appliquer un matériau liquide ou pâteux (6) sur ladite bande continue (2),
- détacher au moins partiellement le matériau solidifié (6) de la bande continue (2), et
- activer au moins temporairement un dispositif de nettoyage (8, 81..83) relié de manière fixe à l'installation de coulée en bande (101..104)
**caractérisé en ce que** un dispositif de polissage (12) relié également de manière fixe à l'installation de coulée en bande (101..104) va être activé au moins temporairement, avec au moins un plateau de polissage rotatif et/ou une polisseuse oscillante et/ou une polisseuse excentrée.

2. Procédé selon la revendication 1, **caractérisé en ce que** le dispositif de nettoyage (8, 81..83) et/ou le dispositif de polissage (12) est activé pendant l'application et le détachement du matériau (6).

3. Procédé selon la revendication 1, **caractérisé en ce que** le dispositif de nettoyage (8, 81..83) et/ou le dispositif de polissage (12) est activé lors de l'arrêt de l'application et du détachement du matériau (6).

4. Procédé selon l'une quelconque des revendications 1 à 3, **caractérisé en ce que** l'application et le détachement du matériau (6), ainsi que le nettoyage et/ou le polissage, surviennent dans la direction de déplacement principale de la bande continue (2).

5. Procédé selon l'une quelconques des revendications 1 à 3, **caractérisé en ce que** le nettoyage et/ou polissage survient dans une direction opposée à la direction de déplacement principale de la bande continue (2).

6. Procédé selon l'une quelconque des revendications 1 à 5, **caractérisé en ce que** la bande continue (2) est
- nettoyé puis polie, ou
- polie puis nettoyée, ou
- pré-nettoyée, puis polie et ensuite nettoyée.

7. Procédé selon la revendication 6, **caractérisé en ce que**
- un pré-nettoyage et le polissage de la bande continue (2) dans une première direction de déplacement de la bande continue (2) et un nettoyage final de celle-ci ont lieu dans une direction opposée à la première direction de déplacement, ou
- un pré-nettoyage de la bande continue (2) dans une première direction de déplacement de la bande continue (2) et le polissage et un nettoyage de celle-ci ont lieu dans une direction opposée à la première direction de déplacement.

8. Installation de coulée en bande (101..104), comprenant :
- une bande continue (2) en métal,
- un entraînement pour déplacer la bande continue (2) dans au moins une direction de déplacement principale,
- un dispositif (5) pour appliquer un matériau liquide ou pâteux (6) sur ladite bande continue (2), et
- un dispositif (7) en aval du dispositif d'application (5) dans la direction de déplacement principale de la bande continue (2), pour détacher le matériau au moins partiellement solidifié (6), et
- un dispositif de nettoyage (8, 81..83) relié de manière fixe à l'installation de coulée en bande (101..104),
**caractérisée par**
un dispositif de polissage (12) relié de manière fixe à l'installation de coulée en bande (101..104), avec au moins un plateau de polissage rotatif et/ou une polisseuse oscillante et/ou une polisseuse excentrée.

9. Installation de coulée en bande (101..104) selon la revendication 8, **caractérisée en ce que** le dispositif de nettoyage et le dispositif de polissage sont disposés respectivement en aval du dispositif de détachement dans la direction de déplacement principale de la bande continue, et en amont du dispositif d'application dans ladite direction de déplacement principale.

10. Installation de coulée en bande (101..104) selon la revendication 8 ou 9, **caractérisé en ce que** le dispositif de polissage (12) est disposé sur le brin inférieur de la bande sans fin (2).

11. Installation de coulée en bande (101..104) selon l'une quelconque des revendications 8 à 10, **caractérisée en ce que** le dispositif de nettoyage (8, 81..83) est disposé sur le brin inférieur de la bande continue (2).

12. Installation de coulée en bande (101..104) selon la revendication 11, **caractérisée en ce que** le dispositif de nettoyage (8, 81..83) et le dispositif de polissage (12) sont disposés sur le brin inférieur de la bande continue (2).

13. Installation de coulée en bande (101..104) selon l'une des revendications 8 à 12, **caractérisée en ce que**
- le dispositif de nettoyage (8, 81..83) est agencé en amont du dispositif de polissage (12) dans la direction de déplacement principale de la bande continue (2),
- le dispositif de nettoyage (8, 81..83) est disposé en aval du dispositif de polissage (12) dans la direction de déplacement principale de la bande continue (2), ou
- le dispositif de polissage (12) est agencé entre deux dispositifs de nettoyage (81, 82).

14. Installation de coulée en bande (101..104) selon l'une quelconque des revendications 8 à 13, **caractérisée en ce que** le dispositif de nettoyage (94) est rempli d'un liquide et est doté d'une cuve (19) ayant un générateur d'ultrasons, à travers laquelle la bande sans fin (2) est conduite.

15. Installation de coulée en bande (101..104) selon l'une quelconque des revendications 8 à 14, **caractérisée en ce que** le dispositif de nettoyage (8, 81..83) présente des buses de pulvérisation (9) pour pulvériser un liquide de nettoyage et/ou des brosses de nettoyage (10) et/ou une raclette (11) et/ou une lame d'air.

16. Installation de coulée en bande (101..104) selon l'une quelconque des revendications 8 à 15, **caractérisée par** au moins un plateau de polissage rotatif et/ou une polisseuse oscillante et/ou une polisseuse excentrée mobile transversalement à la direction de déplacement de la courroie sans fin (2).
